# EUROPEAN PATENT APPLICATION

(11) **EP 3 863 370 A1**
(43) Date of publication of application: **11.08.2021**
(21) Application number: 20155504.2
(22) Date of filing: 04.02.2020
(51) Int. Cl.: H04W 80/02, H04L 1/00, H04W 28/06

(54) **CELLULAR NETWORK BROADCASTING**

(71) Applicant: Institut für Rundfunktechnik GmbH, 80939 München (DE)
(72) Inventor: MENZEL, Christian, 82216 Maisach (DE); GIMENÉZ GANDIA, Jordi Joan, 80799 München (DE)
(74) Representative: Koplin, Moritz

(57) **Abstract**

Provided is a method and a system for broadcasting data in a cellular network which assigns the data to a plurality of Packet Data Convergence Protocol, PDCP, Protocol Data Units, PDUs, assigns the PDCP PDUs to a Radio Link Control, RLC, Service Data Unit, SDU, interleaves segments of the RLC SDU and assigns the interleaved segments to a plurality of Medium Access Control, MAC, SDUs.

## Description

### Technical Field

The present disclosure relates to a method for broadcasting data in a cellular network and a system for broadcasting data over a cellular network.

### Background Art

For broadcasting data, 3rd Generation Partnership Project, 3GPP, cellular networks may use, inter alia, the Multimedia Broadcast Multicast Service, MBMS, the evolved MBMS, eMBMS. An eMBMS Medium Access Control, MAC, Protocol Data Unit, PDU, may comprise a Radio Link Control, RLC, Service Data Unit, SDU, and a header, wherein multiple RLC SDUs form a Packet Data Convergence Protocol, PDCP, Protocol Data Unit, PDU, which comprises the data.

### Summary of Invention

The present invention provides a method for broadcasting data in a cellular network and a system for broadcasting data over a cellular network.

In this regard, the term "cellular network", as used throughout the specification and claims, particularly refers to a 3GPP cellular network such as a 3G network (e.g., a Long Term Evolution, LTE, network), a 4G network (e.g., an LTE-Advanced, LTE-A, network), a 5G/5G New Radio, NR, network, or a 6G network (or any other network that shares characteristics with an LTE, LTE-A, 5G, 5G NR, 6G network as they apply to the present invention).

The method comprises assigning the data to a plurality of PDCP PDUs, assigning the PDCP PDUs to an RLC SDU, interleaving segments (of one or more bits or symbols) of the RLC SDU and assigning the interleaved segments to a plurality of MAC SDUs.

In this regard, the term "assigning", as used throughout the description and the claims, particularly refers to mapping data bits to bit positions of a unit. Furthermore, the term "interleaving", as used throughout the description and the claims, particularly refers to changing the order in which the segments occur while increasing a (mean) distance between formerly neighboring segments.

Interleaving the RLC SDU segments may reduce the risk of data loss caused by temporary signal degradation such as fast fading.

The method may further comprise adding headers to the MAC SDUs and transmitting (broadcasting) the resulting MAC PDUs over an air interface to a multitude of mobile devices (e.g., user equipments, UEs). The mobile devices may deinterleave the RLC SDU segments and apply an error detection/correction algorithm to the deinterleaved RLC SDUs. To this end, even faulty MAC PDUs may be processed at the receiving mobile device. Moreover, error coding may be performed at different layers (e.g., at the RLC layer, the PDCP layer, the IP layer, TCP layer, the application layer, etc.).

For example, the data assigned to the PDCP PDUs may be error coded or assigning the PDCP PDUs to the RLC SDU may include error coding the PDCP PDUs or error coding an RLC PDU which comprises the RLC SDU.

If error coding is performed above the RLC layer, the RLC header (and/or other headers) may be separately error coded.

The RLC SDU may be comprised in an RLC PDU with a length of at least 15000 bytes.

If the RLC PDU contains redundancy bits (as a result of error coding), it may additionally contain a payload of at least 15000 bytes.

The length of the (error coded) RLC PDU may be n times a length of one MAC SDU with n being a positive integer.

The method may further comprise transmitting MAC PDUs that carry segments of different RLC SDUs alternatingly.

For example, the interleaved segments of a first RLC SDU may be assigned to a plurality of first MAC SDUs and the interleaved segments of a second RLC SDU may be assigned to a plurality of second MAC SDUs and the first and second MAC SDUs may be transmitted alternatingly. Obviously, the MAC PDUs carrying segments of more than two different RLC SDUs can be transmitted alternatingly.

Moreover, the transmission may be spread over time in that a single (LTE) frame (of 10ms duration) may comprise only one of said MAC PDUs that carry segments of different RLC SDUs.

In another example, a single (LTE) frame (of 10ms duration) may comprise a multitude of said MAC PDUs that carry segments of different RLC SDUs.

The system is configured to assign the data to Service Data Units, SDUs, of a plurality of Packet Data Convergence Protocol, PDCP, Protocol Data Units, PDUs, assign the PDCP PDUs to a Radio Link Control, RLC, SDU, interleave segments of the RLC SDU and assign the interleaved segments to Medium Access Control, MAC, SDUs.

The data assigned to the PDCP PDUs may be error coded. In another example, assigning the PDCP PDUs to the RLC SDU may include error coding the PDCP PDUs or error coding an RLC PDU comprising the RLC SDU.

The RLC SDU may be comprised in an RLC PDU having a length of 15000 bytes or more.

A length of the RLC PDU may be n times a length of a MAC SDU with n being a positive integer.

The system may be further configured to alternatingly transmit MAC PDUs which carry segments of different RLC SDUs.

In an example, only one MAC PDU which carries segments of different RLC SDUs may be transmitted within a single frame.

The system may be configured to transmit MAC PDUs which carry segments of different RLC SDUs in a single frame.

It will be appreciated that the features and attendant advantages of the disclosed method may be realized by the disclosed system and vice versa. Moreover, it is noted that throughout the description, features in brackets are to be regarded as optional.

### Brief Description of Drawings

The foregoing aspects and many of the attendant advantages will become more readily appreciated as the same becomes better understood by reference to the following description of embodiments, when taken in conjunction with the accompanying drawings, wherein like reference numerals refer to like parts throughout the various views, unless otherwise specified.
Fig. 1 illustrates a cellular network broadcasting scenario;
Fig. 2 illustrates an exemplary protocol stack;
Fig. 3 illustrates RLC SDU interleaving;
Fig. 4 illustrates the transmission of the interleaved segments according to a first exemplary transmission scheme;
Fig. 5 illustrates the transmission of the interleaved segments according to a second exemplary transmission scheme; and
Fig. 6 shows a flow-chart of the transmission process.

Notably, the drawings are not drawn to scale and unless otherwise indicated, they are merely intended to conceptually illustrate the structures and procedures described herein.

### Description of Embodiments

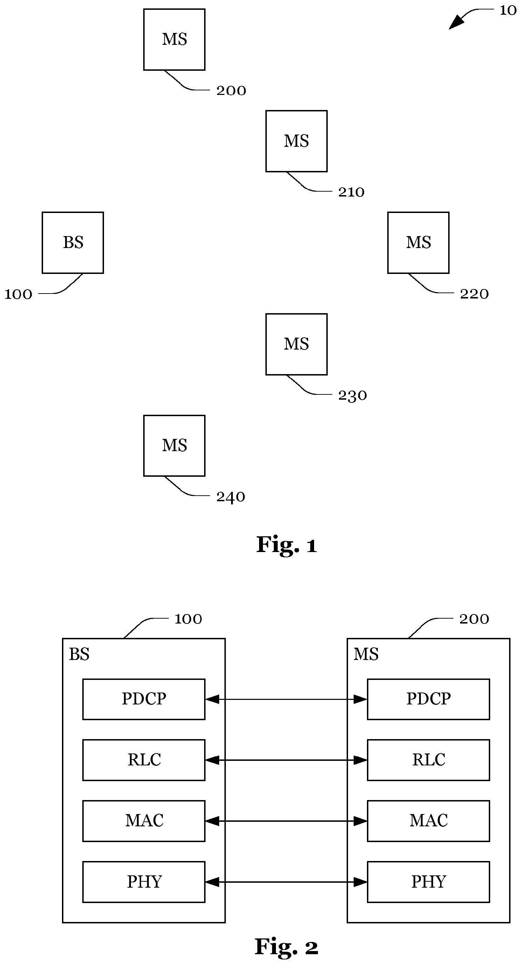

Fig. 1 shows a system 10 for broadcasting data over a cellular network. The system 10 comprises a base station 100 (e.g., an evolved Node B, eNodeB) and several mobile stations 200, 210, 220, 230, 240 (e.g., user equipments, UEs) which receive data from the base station 100. As shown in Fig. 2, the base station 100 is configured to assign the data (which is to be broadcasted) to PDCP PDUs. The base station 100 then assigns the PDCP PDUs to RLC PDUs. The RLC PDUs are then assigned to MAC PDUs and the MAC PDUs are mapped to transport blocks in the physical layer. The mobile station 200 (and the other mobile stations 210, 220, 230, 240) may perform reverse assignments to recover the data.

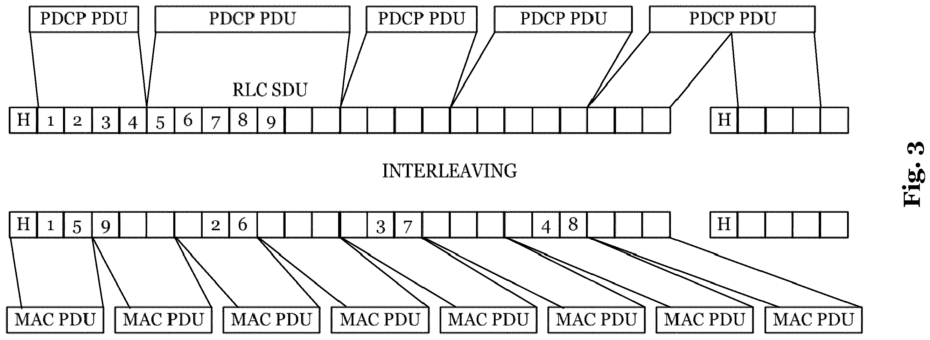

As illustrated in Fig. 3, an RLC SDU may be segmented and the segments 1-9 may be interleaved before assigning the interleaved segments to one or more MAC SDUs. The interleaving may spread the PDCP PDUs, thereby reducing the risk of irrecoverable data loss in case of temporary signal degradation. For example, the length of an RLC PDU may be n times a length of a MAC SDU with n being a positive integer (e.g., 8, 9, 10, 11, 12, etc.). The resulting RLC PDU may have a length of 10.000 bytes or more, or 15.000 bytes or more. This may enforce that an RLC PDU is spread over multiple MAC PDUs / transport blocks / subframes or system frames.

Moreover, the RLC PDUs, RLC SDUs, PDCP PDUs, PDCP SDUs (or data contained in said SDUs/PDUs) may be error (correction) coded (for example, based on a block code). Hence, faulty blocks may not be discarded at the mobile station 200 (and the other mobile stations 210, 220, 230, 240) but used for recovering the error (correction) coded data. Hence, no CRC may be applied to the MAC PDUs or the MAC PDUs may be provided to the RLC layer despite CRC errors.

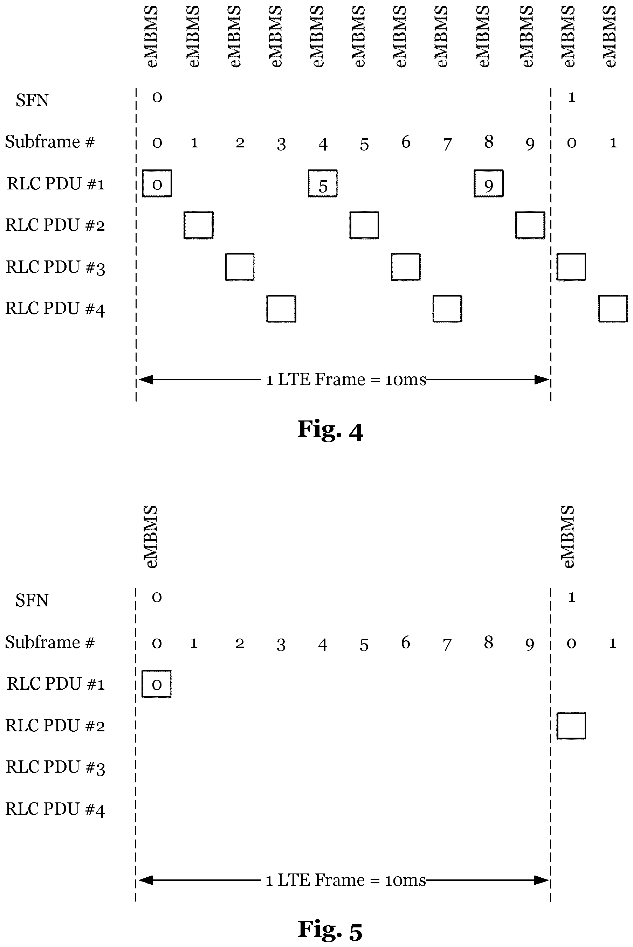

As shown in Fig. 4, the blocks carrying the data of consecutive RLC PDUs (four consecutive RLC-PDUs in this particular example) may be transmitted alternatingly. For example, a first block carrying a first segment of the interleaved segments of a first RLC PDU may be followed by a second block carrying a first segment of the interleaved segments of a second RLC PDU and so forth. In another example, the alternatingly transmitted blocks may carry data of RLC PDUs that are assigned to different logical channels (e.g., different broadcast channels).

As shown in Fig. 5, only a subset of subframes (one subframe of a system frame in this particular example) may be configured for eMBMS and the data of consecutive RLC PDUs (four consecutive RLC-PDUs in this example) may be transmitted alternatingly in the subframes which are configured for eMBMS. Hence, in a first system frame, a first block carrying a first segment of the interleaved segments of a first RLC PDU may be transmitted and in a (consecutive) second system frame, a second block carrying a first segment of the interleaved segments of a second RLC PDU may be transmitted.

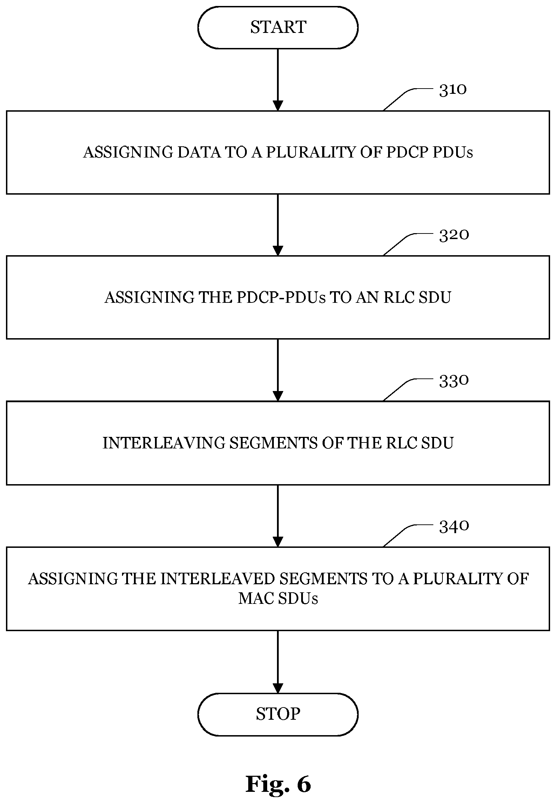

Fig. 6 shows a flow-chart of the transmission process. At step 310, the base station 100 assigns data that is to be broadcasted to the mobile stations 200, 210, 220, 230, 240 to a plurality of PDCP PDUs. At step 320, the PDCP PDUs are assigned to an RLC SDU. After interleaving segments of the RLC SDU in step 330, the interleaved segments are assigned to a plurality of MAC SDUs in step 340. The MAC SDUs may then be provided with a headers and transmitted in transport blocks over the air interface to the mobile stations 200, 210, 220, 230, 240. The mobile stations 200, 210, 220, 230, 240 may then apply an error correcting code to recover the data in case of transmission errors.

### REFERENCE SIGNS

- 1-9: segments
- 10: system
- 100: base station
- 200: mobile station
- 210: mobile station
- 220: mobile station
- 230: mobile station
- 240: mobile station
- 310: process step
- 320: process step
- 330: process step
- 340: process step
- H: header

## Claims

1. A method for broadcasting data in a cellular network, the method comprising:
assigning (310) the data to a plurality of Packet Data Convergence Protocol, PDCP, Protocol Data Units, PDUs;
assigning (320) the PDCP PDUs to a Radio Link Control, RLC, Service Data Unit, SDU;
interleaving (330) segments of the RLC SDU; and
assigning (340) the interleaved segments to a plurality of Medium Access Control, MAC, SDUs.

2. The method of claim 1, wherein
the data assigned to the PDCP PDUs is error coded; or
assigning the PDCP PDUs to the RLC SDU includes
error coding the PDCP PDUs or
error coding an RLC PDU comprising the RLC SDU.

3. The method of claim 1 or 2, wherein the RLC SDU is comprised in an RLC PDU with a length of 15000 bytes or more.

4. The method of any one of claims 1 to 3, wherein a/the length of the RLC PDU is n times a length of one MAC SDU with n being a positive integer.

5. The method of any one of claims 1 to 4, further comprising:
transmitting MAC PDUs that carry segments of different RLC SDUs alternatingly.

6. The method of claim 5, wherein a single frame comprises only one of said MAC PDUs that carry segments of different RLC SDUs.

7. The method of any one of claims 1 to 5, wherein a single frame comprises MAC PDUs that carry segments of different RLC SDUs.

8. The method of any one of claims 1 to 7, wherein the cellular network is a 3G, a 4G, or a 5G network.

9. A system (100) for broadcasting data over a cellular network, the system (100) being configured to:
assign the data to Service Data Units, SDUs, of a plurality of Packet Data Convergence Protocol, PDCP, Protocol Data Units, PDUs;
assign the PDCP PDUs to a Radio Link Control, RLC, SDU;
interleave segments of the RLC SDU; and
assign the interleaved segments to Medium Access Control, MAC, SDUs.

10. The system (100) of claim 9, wherein the data assigned to the PDCP PDUs is error coded or assigning the PDCP PDUs to the RLC SDU includes error coding the PDCP PDUs or error coding an RLC PDU comprising the RLC SDU.

11. The system (100) of claim 9 or 10, wherein the RLC SDU is comprised in an RLC PDU having a length of 15000 bytes or more.

12. The system (100) of any one of claims 9 to 11, wherein a length of the RLC PDU is n times a length of a MAC SDU with n being a positive integer.

13. The system (100) of any one of claims 9 to 12, wherein the system (100) is configured to:
alternatingly transmit MAC PDUs which carry segments of different RLC SDUs.

14. The system (100) of claim 13, wherein only one MAC PDU which carries segments of different RLC SDUs is transmitted within a single frame.

15. The system (100) of any one of claims 9 to 12, wherein the system (100) is configured to:
transmit MAC PDUs which carry segments of different RLC SDUs in a single frame.
